(19) Europäisches Patentamt
European Patent Office
Office européen des brevets

(11) Veröffentlichungsnummer : **0 154 674**
**B1**

(12) # EUROPÄISCHE PATENTSCHRIFT

(45) Veröffentlichungstag der Patentschrift : **10.02.88**

(51) Int. Cl.⁴ : **B 01 J 19/00**, B 01 J 8/00

(21) Anmeldenummer : **84109691.0**

(22) Anmeldetag : **14.08.84**

(54) **Verfahren und Reaktor zur Durchführung einer endothermen Reaktion.**

(30) Priorität : **26.01.84 DE 3402713**

(43) Veröffentlichungstag der Anmeldung : **18.09.85 Patentblatt 85/38**

(45) Bekanntmachung des Hinweises auf die Patenterteilung : **10.02.88 Patentblatt 88/06**

(84) Benannte Vertragsstaaten : **AT BE DE FR GB IT NL**

(56) Entgegenhaltungen :
**DE-A- 2 832 808**
**DE-B- 1 601 163**
**DE-B- 2 229 221**
**GB-A- 2 084 894**

(73) Patentinhaber : **Linde Aktiengesellschaft**
**Abraham-Lincoln-Strasse 21**
**D-6200 Wiesbaden (DE)**

(72) Erfinder : **Riquarts, Hans-Peter, Dr.-Ing.**
**Wolfratshauser Strasse 88 A**
**D-8023 Pullach (DE)**
Erfinder : **Häussinger, Peter, Dr. Dipl.-Chem.**
**Am Brombeerschlag 26**
**D-8000 München 70 (DE)**
Erfinder : **Wernicke, Hans-Jürgen, Dr. Dipl.-Chem.**
**Böhmerwaldstrasse 37**
**D-8192 Geretsried (DE)**

(74) Vertreter : **Schaefer, Gerhard, Dr.**
**Linde Aktiengesellschaft Zentrale Patentabteilung**
**D-8023 Höllriegelskreuth (DE)**

**EP 0 154 674 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur gleichzeitigen Durchführung einer endothermen und einer exothermen Reaktion in einem Reaktionsraum, der zwei in Wärmetausch miteinander befindliche Gruppen von Strömungswegen aufweist, wobei die eine Gruppe von Strömungswegen von einem eine endotherme Reaktion und die andere Gruppe von Strömungswegen von einem eine exotherme Reaktion durchlaufenden Fluid durchströmt wird.

Bei endothermen Reaktionen, wie beispielsweise Spaltungen oder Synthesen, wird einem reagierenden Fluid Wärme zugeführt, um es auf die für die Reaktion benötigte Temperatur zu erhitzen. Zum Erhitzen steht der Reaktionsraum und/oder die Fluidzuführung zum Reaktionsraum in wärmetauschender Verbindung mit einem Wärmeträgermedium, beispielsweise Heißdampf. Eine andere oder zusätzliche Möglichkeit ist das Beheizen eines Reaktors durch Brenner. Diese Methode wird beispielsweise bei der thermischen Spaltung von Kohlenwasserstoffen angewendet.

Die DE-A 28 32 808 zeigt ein Verfahren zur Regeneration eines Katalysators für das katalytische Cracken, bei dem mit Koks beladene Katalysatorteilchen aus einem Spaltreaktor nacheinander zwei Regenerationszonen durchlaufen und anschließend dem Spaltreaktor wieder zugeführt werden. Die Regeneration findet in einem von dem Crackreaktor getrennten Regenerationsreaktor statt. Ziel des in dieser Druckschrift beschriebenen Verfahrens ist es, die Erhitzung bei der Regeneration zu kontrollieren, um möglichst Wärme nach außen abzugeben. Zu diesem Zweck wird in der ersten Regenerationszone neben einer exothermen zusätzlich eine endotherme Reaktion unterhalten.

Die DE-B 16 01 163 zeigt einen Rohrbündelreaktor mit zweierlei Strömungswegen zur Führung einerseits eines Wärmeübertragungsmittels und andererseits eines reagierenden Mediums. Die beiden Strömunswege befinden sich in Wärmetausch miteinander.

Die bisher bekanntgewordenen Verfahren haben jedoch alle den Nachteil, daß relativ viel teure Energie, sei es in Form von fossilen Brennstoffen oder in Form eines heißen Wärmeträgermediums, aufgebracht werden muß, um die endotherme Reaktion durchführen zu können.

Der vorliegenden Erfindung liegt daher die Aufgabe zugrunde, ein Verfahren der eingangs genannten Art zu entwickeln, das in wirtschaftlicher Weise und mit geringem apparativem Aufwand durchfahrbar ist.

Diese Aufgabe wird erfindungsgemäß dadurch gelöst, daß die Strömungswege für die beiden Fluide in Zeitintervallen vertauscht werden.

Bei dem erfindungsgemäßen Verfahren wird im Gegensatz zu bisher üblichen Verfahren nur ein Teil des Reaktionsraumes für die endotherme Reaktion verwendet. Der andere Teil des Reaktionsraumes ist hiervon abgetrennt und wird von einem Fluid durchströmt, das eine exotherme Reaktion durchführt.

Durch die simultane Durchführung einer endothermen und einer exothermen Reaktion in zwei Teilabschnitten eines Reaktionsraumes wird der Einsatz teurer Fremdenergie je nach Anwendungsfall entweder wesentlich verringert oder sogar ganz entbehrlich. Die Frage, ob von außen noch zusätzlich Energie herangeführt werden muß, hängt davon ab, inwieweit die Endothermie und Exothermie der beiden in dem Reaktionsraum ablaufenden Reaktionen aufeinander abgestimmt sind. Die Zuführung äußerer Wärmeenergie kann vollständig unterbleiben, wenn die auf dem erforderlichen Temperaturniveau bei der exothermen Reaktion freiwerdende Wärme für die Aufrechterhaltung der endothermen Reaktion ausreicht.

Das erfindungsgemäße Verfahren läßt sich ohne besonderen apparativen Aufwand verwirklichen, es ist lediglich erforderlich, den Reaktionsraum in zwei Teilräume zu unterteilen.

Bei einer Weiterbildung des erfindungsgemäßen Verfahrens wird vorgeschlagen, daß die Strömungswege für die beiden Fluide in Zeitintervallen vertauscht werden.

In einem ersten Schalttakt wird beispielsweise das endotherm reagierende Fluid durch den ersten Strömungsweg und das exotherm reagierende Fluid durch den zweiten Strömungsweg des Reaktionsraumes geleitet. In einem zweiten Schalttakt werden die Zu- und Abführungseinrichtungen zu und von den beiden Strömungswegen vertauscht, so daß nunmehr das exotherm reagierende Fluid durch den ersten und das endotherm reagierende Fluid durch den zweiten Strömungsweg geleitet wird.

Diese Maßnahme bietet den Vorteil, daß die Wände des Strömungsweges, in welchem die exotherme Reaktion stattfindet, die gespeicherte Wärme im darauffolgenden Schalttakt an das endotherm reagierende Fluid abgeben, so daß die Ausnutzung der freiwerdenden Wärme verbessert wird.

Es erweist sich als zweckmäßig, wenn gemäß einem weiteren Erfindungsmerkmal die endotherme Reaktion in Anwesenheit eines Katalysators durchgeführt wird. Der Katalysator wirkt beim Vertauschen der Strömungswege wie eine Wärmespeichermasse.

Bei einer bevorzugten Weiterbildung des erfindungsgemäßen Verfahrens wird als exotherme Reaktion eine Hydrierung von Kohlenwasserstoffen durchgeführt.

Bei einer bevorzugten Ausgestaltung des erfindungsgemäßen Verfahrens wird vorgeschlagen, daß bei der exothermen Reaktion Rückstände, die sich bei der endothermen Reaktion in dem Reaktionsraum gebildet haben, oxidiert werden.

Bei dieser Verfahrensführung wird neben der Wärmeübertragung zugleich eine Regeneration des Reaktionsraumes erzielt. Bei sämtlichen Reaktionen, katalytischen und nichtkatalytischen, bei denen sich im Reaktionsraum Rückstände bilden, müssen diese von Zeit zu Zeit entfernt werden, da die Rückstände den Wärmeübergang durch die Wände des Reaktionsraumes verschlechtern und gegebenenfalls vorhandenen Katalysator desaktivieren. Die Entfernung der Rückstände erfolgt im vorliegenden Fall durch Oxidation. Die Oxidation läuft exotherm ab, wobei die freiwerdende Reaktionswärme auf den simultan ablaufenden endothermen Prozeß übertragen wird. Das Abbrennen von Rückständen, das bei derartigen Reaktionen ohnehin von Zeit zu Zeit erforderlich ist, wird demnach in den endothermen Prozeß einbezogen. Damit wird die anfallende Wärme optimal ausgenutzt. Außerdem kann das Verfahren bei periodischem Umschalten der Strömungskanäle kontinuierlich betrieben werden, da die Verbrennung der Rückstände parallel zu der endothermen Reaktion abläuft.

Gemäß einer weiteren Ausgestaltung des erfindungsgemäßen Verfahrens enthalten die Rückstände als wesentlichen Bestandteil Koks.

Die Bildung von Koksablagerungen tritt insbesondere bei der thermischen Spaltung von Kohlenwasserstoffen sowie bei katalytischen Verfahren, wie der Propan- oder Butan-Dehydrierung zu Monoolefinen oder der Butadienerzeugung auf.

Bei einer vorteilhaften Weiterbildung des erfindungsgemäßen Verfahrens wird die exotherme Reaktion auf einem höheren Temperaturniveau als die endotherme Reaktion durchgeführt. Auf diese Weise wird ein Wärmefluß von der exothermen zu der endothermen Reaktionszone erreicht.

Nach einem weiteren Erfindungsmerkmal erfolgt die Wärmeübertragung über ein Hilfsfluid. Die beiden Gruppen von Strömungswegen sind bei dieser Verfahrensweise nicht unmittelbar benachbart.

Bei einer bevorzugten Weiterbildung des erfindungsgemäßen Verfahrens ist das Hilfsfluid ein fluidisierter Teilchenstrom.

Das Wirbelgut, beispielsweise Sand, befindet sich aufgrund seiner guten Durchmischung auf einem quasi isothermen Temperaturniveau. Der fluidisierte Teilchenstrom besitzt hervorragende Wärmeübertragungseigenschaften und überträgt Wärme aus dem Strömungsweg, in dem eine exotherme Reaktion stattfindet, auf den Strömungsweg, in dem eine endotherme Reaktion abläuft.

Bei einer bevorzugten weiteren Ausgestaltung des erfindungsgemäßen Verfahrens werden die fluidisierten Teilchen kontinuierlich aus dem Wirbelbett abgezogen, außerhalb des Wirbelbettes aufgeheizt und in das Wirbelbett zurückgeleitet.

Diese Verfahrensweise erweist sich insbesondere dann als sinnvoll, wenn wie beispielsweise bei der Dehydrierung von Kohlenwasserstoffen und dem gleichzeitigen Abbrand von Koksablagerungen mehr Wärme verbraucht als erzeugt wird. Durch das Umwälzen und Aufheizen des Wirbelgutes wird der Nettowärmebedarf gedeckt. Das Wirbelgut wird beispielsweise durch Rauchgas angewärmt und gleichzeitig pneumatisch gefördert.

Es erweist sich als zweckmäßig, wenn gemäß einer bevorzugten Weiterbildung des erfindungsgemäßen Verfahrens das Hilfsfluid auf einer Temperatur gehalten wird, die oberhalb der Temperatur, bei der die endotherme Reaktion stattfindet, und unterhalb der Temperatur, bei der die exotherme Reaktion stattfindet, liegt.

Bei einer vorteilhaften Ausgestaltung des erfindungsgemäßen Verfahrens werden die beiden Fluide im Gleich- oder Gegenstrom durch die Strömungswege geführt.

Ein Reaktor zur Durchführung des erfindungsgemäßen Verfahrens umfaßt einen Reaktionsraum, der zwei in wärmetauschender Verbindung miteinander stehende Gruppen von Strömungswegen aufweist, die jeweils an eine Zuleitung und eine Ableitung für zweierlei Fluide angeschlossen sind, und ist dadurch gekennzeichnet, daß zwischen den Zuleitungen und den Ableitungen und den zwei Gruppen von Strömungswegen Umschalteinrichtungen vorgesehen sind, durch die beide Zu- oder Ableitungen mit jeder Gruppe verbindbar sind.

Bei einer bevorzugten Weiterbildung des erfindungsgemäßen Reaktors ist der Reaktionsraum mit einem Katalysator gefüllt.

Es erweist sich als zweckmäßig, wenn der Außenraum um die Strömungswege fluidisierbare Teilchen enthält.

In weiterer Ausgestaltung des erfindungsgemäßen Reaktors wird vorgeschlagen, daß die Strömungswege innerhalb von in einem Gehäuse verlaufenden Rohren angeordnet sind.

Bei dieser Anordnung wird zumindest ein Teil der Wärme zwischen den Rohren der beiden Gruppen von Strömungswegen durch ein Hilfsfluid übertragen, das den Außenraum um die Rohre in dem Behälter ausfüllt.

Bei einer anderen vorteilhaften Ausgestaltung des Erfindungsgegenstandes sind die Strömungswege durch die Zwischenräume zwischen mit Abstand zueinander angeordneten parallelen Platten gebildet, wobei jeweils benachbarte Zwischenräume an verschiedenen Zuleitungen und Ableitungen angeschlossen sind.

Hierbei grenzen jeweils zwei Strömungswege der beiden verschiedenen Gruppen aneinander. Jeweils zwei benachbarte Strömungswege weisen eine gemeinsame Trennwand auf.

Die Erfindung sowie weitere Einzelheiten der Erfindung werden anhand von schematisch dargestellten Ausführungsbeispielen näher erläutert.

Hierbei zeigen :

Figur 1 einen Reaktor mit rohrförmigen Strömungsquerschnitten,

Figur 2 einen Reaktor mit durch Platten begrenzten Strömungsquerschnitten

Figur 3 ein Fließschema einer Ausführungsform des erfindungsgemäßen Verfahrens

Figur 4 ein Zeit-Schaltschema für einen erfindungsgemäßen Reaktor.

Die in den Figuren 1 und 2 dargestellten Reaktoren dienen beispielsweise zur Durchführung einer katalytischen endothermen Reaktion, wie der Dehydrierung von Isobutan zu Isobuten. Die Reaktion erfolgt nach der Gleichung

$$C_4H_{10} \rightarrow C_4H_8 + H_2 ; \Delta H_{298} = + 117,7 \text{ kJ/mol}$$

Der Reaktor gemäß Figur 1 ist ein sogenannter Röhrenreaktor. Er weist ein Gehäuse 1 von zylindrischer Gestalt auf, das an seinen Enden kuppelförmige Böden 2, 3 trägt. In dem Gehäuse 1 läuft eine größere Anzahl von Rohren 4 geradlinig und parallel zu der Zylinderachse. Die Enden der Rohre 4 sind in Rohrböden 5, 6 zusammengefaßt, die sich über den Querschnitt des Gehäuses 1 erstrecken.

Ein Teil der Rohre 4, etwa die Hälfte, ist unmittelbar mit einer Zuführungseinrichtung 7 für ein erstes Fluid verbunden, während die übrigen Rohre auf dieser Seite des Reaktors in den durch den Boden 2 gebildeten Sammelraum 8 münden, der eine Zuführungseinrichtung 9 für ein zweites Fluid aufweist.

Umgekehrt sind die mit dem Sammelraum 8 in Verbindung stehenden Rohre 4 am anderen Ende des Reaktors unmittelbar mit einer Abführungseinrichtung 10 verbunden, während die mit der Zuführungseinrichtung 7 verbundenen Rohre 4 in einen Sammelraum 11, der durch den Boden 3 gebildet ist, münden. Der Sammelraum 11 weist eine Abführungseinrichtung 12 auf. Die Zuführungseinrichtungen 7, 9 und die Abführungseinrichtungen 10, 12 stehen über zwei Umschaltungseinrichtungen 19 bzw. 20 mit Zuleitungen 15, 16 für ein erstes bzw. zweites Fluid sowie mit Ableitungen 17, 18 für aus dem Reaktor entnommene Fluide in Verbindung.

Mit den Bezugszeichen 13 und 14 sind eine Zu- und eine Abführungseinrichtung bezeichnet, die mit dem Inneren des Gehäuses 1 in Verbindung stehen.

Die Rohre 4 sind mit einer Schüttung aus einem Katalysatormaterial, beispielsweise Chromoxid auf Aluminiumoxid gefüllt. Das Innere der Rohre stellt den Reaktionsraum für die Dehydrierung dar.

Aufgrund der Verbindung mit zweierlei Zuführungseinrichtungen 7, 9 und zwei Abführungseinrichtungen 10, 12 ist der Reaktionsraum in zwei Gruppen von Strömungswegen unterteilt, nämlich einem ersten Strömungsweg, der von dem durch die Zuführungseinrichtung 7 zugeführten Fluid und einen zweiten Strömungsweg, der von dem durch die Zuführungseinrichtung 9 zugeführten Fluid durchströmt wird. Die hier gezeigte Strömungsrichtung der beiden Fluide (Gleichstrom) ist willkürlich, je nach den Verfahrensbedingungen könnte auch Gegenströmung gewählt werden.

In der durchgezeichneten Position der Umschalteinrichtungen 19, 20 strömt das über die Zuleitung 15 zugeführte Fluid zur Zuführungseinrichtung 7, durchströmt den damit verbundenen Teil des Reaktionsraumes, aus dem die im Reaktionsraum gebildeten Reaktionsprodukte über die Zuführungseinrichtung 12 und die Ableitung 17 entnommen werden. Das über die Zuleitung 16 zugeführte Fluid strömt die Zuführungseinrichtung 9 in den damit verbundenen Teil des Reaktionsraumes, aus dem die dort gebildeten Reaktionsprodukte über die Abführungseinrichtung 10 und die Ableitung 18 entnommen werden.

In gewissen Zeitintervallen (in der Größenordnung Minuten bis einige Stunden, je nach Anwendungsfall) werden die Umschalteinrichtungen 19, 20 umgeschaltet (gestrichelt dargestellte Position), so daß nunmehr die Zulassung 15 mit der Zuführungseinrichtung 9 und die Zuleitung 16 mit der Zuführungseinrichtung 7 verbunden ist. Mit dieser Maßnahme werden die beiden Gruppen von Strömungswegen des Reaktionsraumes vertauscht. Dementsprechend werden auch die Ableitungen 17, 18 vertauscht, d. h. Ableitung 17 ist mit der Abführungseinrichtung 10 und Ableitung 18 mit der Abführungseinrichtung 12 verbunden.

Bei der Dehydrierung von Isobutan wird beispielsweise über Leitung 15 Isobutan in die eine Gruppe der Strömungswege innerhalb der Rohre 4 geleitet. Die Rohre 4 werden durch eine weiter unten beschriebene Wärmequelle auf die für die Durchführung der Dehydrierung beschriebenen Temperatur von ca. 560 °C erwärmt. Die Reaktionsprodukte (Isobuten und $H_2$) verlassen den Reaktor über die Abführungseinrichtung 12.

Bei der Dehydrierung entsteht als Nebenprodukt Koks, der sich auf den Katalysatorteilchen absetzt. Dieser Belag muß Zeit zu Zeit entfernt werden, da er den Katalysator desaktiviert. Sobald ein vorgegebener Prozentsatz des Katalysators desaktiviert ist, werden daher die Umschalteinrichtungen 19, 20 umgeschaltet, so daß das Isobutan nunmehr in die andere Gruppe von Strömungswegen, die noch frischen Katalysator enthalten, gelangt. Zugleich wird über die andere Zuleitung 16 und Zuführungseinrichtung 7 ein sauerstoffhaltiges Gas, z. B. ein Stickstoff-Sauerstoff-Gemisch in die erste Gruppe von Strömungswegen geleitet.

Der auf den Katalysator abgelagerte Koks wird durch das sauerstoffhaltige Gas in einer exothermen Reaktion oxidiert und aus der Reaktionszone ausgetragen. Dabei entstehen Temperaturen von 400 bis 800 °C.

Sobald die Koksablagerungen in der zweiten Gruppe von Strömungswegen eine bestimmte Stärke erreicht haben, werden die Umschalteinrichtungen 19, 20 erneut umgeschaltet.

Während somit im einen Teil des Reaktionsraumes die endotherme Dehydrierung stattfindet, findet im anderen Teil des Reaktionsraumes die exotherme Oxidation von bei der Dehydrierung gebildeten Koksrückständen statt. Die bei der Oxidation gebildete Wärme heizt das Katalysatormaterial und die Rohrwände auf. Die Wärme wird über ein Hilfsfluid, das dem Behälter 1 über die Zuführungseinrichtung 13 zugeführt wird, auf diejenigen Rohre übertragen, in denen die Dehydrierung stattfindet, d. h. die bei der Regeneration des Katalysatormaterials freiwerdende Wärmemenge wird unmittelbar zur Durchführung der endothermen Dehydrierung verwendet. Sollten die Wärmeumsätze der beiden simultan ablaufenden Reaktionen nicht genau gleich sein, so kann durch das Hilfsfluid zusätzliche Wärme zu- oder abgeführt werden.

Durch periodisches Umschalten der beiden Strömungswege ist ein kontinuierlicher Betrieb gewährleistet. Überdies wirken das Katalysatormaterial und die Rohrwände sowie das Hilfsfluid beim Umschalten als Wärmespeichermasse.

Der Reaktor gemäß Figur 2 weist einen Reaktionsraum auf, der durch eine Vielzahl von mit Abstand zueinander angeordneten parallelen Platten in einzelne Strömungswege unterteilt ist. Der Reaktor ist in einem Gehäuse 21 untergebracht, das Header 22, 23 und 24, 25 zur Zuführung bzw. Abführung zweier Fluide enthält. In dem Gehäuse 21 sind parallel und mit Abstand zueinander ebene oder gewellte Platten angeordnet, die parallel zur Zeichenebene verlaufen. In der Figur sind zwei Platten 26, 27 angedeutet, tatsächlich enthält der Reaktor eine größere Anzahl von Platten. Der Zwischenraum zwischen den Platten ist mit Katalysatormaterial gefüllt.

Die Platten bilden Begrenzungswände für Strömungswege, in denen die beiden Fluide geführt sind. Die Strömungswege sind seitlich (in der Figur unten und oben) verschlossen. Die Stirnseiten der Strömungswege sind jeweils abwechselnd mit den Headern 22, 24 bzw. 23, 25 verbunden, d. h. der erste, dritte, fünfte usw. Strömungsweg ist auf der einen Stirnseite mit dem Header 22 und auf der anderen Stirnseite mit dem Header 24 verbunden, während der zweite, vierte, sechste usw. Strömungsweg auf der einen Stirnseite mit dem Header 23 und auf der anderen Stirnseite mit dem Header 25 verbunden ist.

Die Header 22 bis 25 sind über Umschalteinrichtungen 19, 20, deren Funktion bereits in Zusammenhang mit Figur 1 beschrieben worden ist, mit Zuleitungen 15, 16 und Ableitungen 17, 18 für das erste und zweite Fluid verbunden.

Bei der beschriebenen Anordnung ist der Reaktionsraum in viele Teilräume unterteilt, die in wärmetauschender Verbindung miteinander stehen, wobei jeweils benachbarte Teilräume von verschiedenen Fluiden durchströmt werden. In der gezeigten Ausführungsform sind die Fluide im Gegenstrom geführt (Pfeile 28, 29), es ist je nach Anwendungsfall auch eine Gleichstrom- oder Kreuzstromführung der beiden Fluide denkbar.

Eines der beiden Fluide wird in denjenigen Strömungskanälen, die den Reaktionsraum für dieses Fluid bilden, einer endothermen Reaktion unterzogen. Das zweite der beiden Fluide durchläuft in den anderen Strömungskanälen eine exotherme Reaktion, wobei die freiwerdende Reaktionswärme auf die in den benachbarten Strömungskanälen ablaufende endotherme Reaktion übertragen wird.

Beispielsweise wird mit diesem Reaktor im einen Teil des Reaktionsraumes die anhand von Figur 1 beschriebene Dehydrierung von Isobutan durchgeführt, während gleichzeitig im anderen Teil des Reaktionsraumes bei der Dehydrierung in der vorangegangenen Schaltstufe gebildete Koksablagerungen abgebrannt werden. Mittels der Umschalteinrichtungen 19, 20 werden die Strömungswege periodisch vertauscht, wenn der Katalysator mit einer gewissen Koksmenge beladen ist bzw. wenn der Katalysator durch Abtrennen ausreichend regeneriert ist.

Selbstverständlich lassen sich mit dem Reaktor auch andere Reaktionspaare durchführen, beispielsweise

- katalytische Dehydrierung von Propan oder Ethan, endotherm/Regenerierung des Katalysators, exotherm ;
- katalytische Dehydrierungen aller Art, endotherm/katalytische Hydrierungen, Hydrodealkylierungen oder Alkylierungen, exotherm ;
- katalytische Oxidationen, z. B. Partialoxidation von Ethylen zu Ethylenoxid, Oxidation von Xylol zu Phthalsäureanhydrid Maleinsäureanhydrid aus Benzol oder Buten, alle exotherm/endotherme Reaktionen aller Art ;
- katalytische Spaltung von Methanol, endotherm/Methanisierung oder Konvertierung von Kohlenoxid, exotherm.

In denjenigen Anwendungsfällen, in denen endotherme und exotherme Reaktion von verschiedener Art sind und an verschiedenen Katalysatorsystemen ablaufen, ist das periodische Vertauschen der Strömungswege nicht notwendig bzw. möglich. Auf die entsprechenden Umschalteinrichtungen kann dann verzichtet werden.

Figur 3 zeigt eine Ausführungsform des erfindungsgemäßen Verfahrens, bei dem die Wärmeübertragung zwischen den beiden Reaktionszonen durch einen fluidisierten Teilchenstrom erfolgt. Ein Reaktor 1 enthält eine Anzahl von Rohren 4, die mit einer Schüttung aus Katalysatormaterial gefüllt sind, und die den Reaktionsraum bilden. Die Rohre 4 sind abwechselnd mit zwei Zuleitungen 15, 16 und zwei Ableitungen 17, 18 verbindbar. Mittels nicht dargestellter Umschalteinrichtungen ist dabei ein Teil der Rohre 4 einerseits mit der Zuleitung 15 und andererseits mit der Ableitung 18 verbunden, während ein anderer Teil der Rohre einerseits mit der Zuleitung 16 und andererseits mit der Ableitung 17 verbunden ist. Von Zeit zu Zeit werden die Zu- und Ableitungen umgeschaltet, wobei dann Rohre, die ursprünglich 5 mit der Zuleitung 15 und der Ableitung 18 verbunden waren, mit der Zuleitung 16 und der Ableitung 17 verbunden sind und umgekehrt. Ein Beispiel für ein derartiges Schaltschema ist in Figur 4 dargestellt.

Es muß bei der Umschaltung darauf geachtet werden, daß die Summe aller Rohre, die an die Zuleitung 15 bzw. an die Zuleitung 16 angeschlossen sind, konstant ist, um einen konstanten Wärmefluß aus den Rohren und in die Rohre zu erhalten.

Zwischen der Zuleitung 15 und der Ableitung 18 sowie zwischen der Zuleitung 16 und der Ableitung 17 ist jeweils ein Wärmetauscher 30 bzw. 31 vorgesehen.

Die Wärmeübertragung zwischen den Rohren erfolgt mittels eines fluidisierten Teilchenstromes. Der Reaktor 1 enthält im Außenraum um die

Rohre 4 ein Wirbelbett 32, das an seiner Unterseite durch einen gasdurchlässigen Rost 33 begrenzt ist.

Das Wirbelbett 32 enthält beispielsweise Sand, der mittels eines über eine Leitung 34 unterhalb des Rostes 33 dem Reaktor zugeführten Wirbelgases verwirbelt wird. Als Wirbelgas wird beispielsweise Luft verwendet.

Bei einer Reihe von Reaktionspaaren, wie beispielsweise bei der anhand Figur 1 beschriebenen Dehydrierung von Isobutan bei gleichzeitigem Koksabbrand wird bei der endothermen Reaktion mehr Wärme verbraucht als während der exothermen Reaktion entsteht. Es ist daher erforderlich, dem wärmeübertragenden Wirbelgut den Nettobedarf an Wärme kontinuierlich zuzuführen. Dies wird dadurch erreicht, daß stets ein Teil des Wirbelgutes über eine Rohrleitung 35 aus der Wirbelschicht abgezogen und in einen Sandlift 39 geleitet wird. An der Unterseite des Sandliftes 39 befindet sich ein Brenner 36, der mit Brennstoff 37 und Verbrennungsluft 38, die vom Wirbelgas 34 abgezweigt wird, betrieben wird. Durch das Rauchgas des Brenners 36 wird der Sand erwärmt und gleichzeitig pneumatisch in einen Sammler 40 befördert, der sich oberhalb des Reaktors 1 befindet. Der erhitzte Sand wird über eine Rohrleitung 41 von oben in den Reaktor 1 eingeleitet. Das Rauchgas wird über eine Leitung 42 aus dem Sammler 40 entnommen und einem Zyklon 44 zugeführt. Dort wird im Rauchgas enthaltener Staub über eine Leitung 43 abgetrennt. Das gereinigte Rauchgas wird über eine Leitung 45 entnommen und nach Wärmetausch mit der Verbrennungsluft in einem Wärmetauscher 46 abgeführt. Mit dem Bezugszeichen 51 ist eine Zuführungsleitung für frischen Sand bezeichnet.

Als Alternative zu der oben beschriebenen Handhabung des Wirbelgutes kann der Reaktor 1 auch derart betrieben werden, daß die Menge des Wirbelgases 34 so hoch bemessen ist, daß am Kopf der Wirbelschicht über eine Leitung 47 stets soviel Wirbelgut ausgetragen und außerhalb des Reaktors erwärmt wird, wie für die Deckung des Energiebedarfs bei dem jeweiligen Reaktionspaar erforderlich ist. Das Wirbelgut wird in einem Zyklus 48 von dem Wirbelgas, das über eine Leitung 49 aus dem Zyklon entnommen und in das Wirbelgas 34 rückgeführt wird, abgetrennt und nach einer in der Figur nicht dargestellten Aufheizung über eine Leitung 50 im unteren Bereich des Reaktors in das Wirbelbett zurückgeleitet.

Figur 4 zeigt ein Schaltschema für drei Rohre 4 eines erfindungsgemäßen Reaktors in Abhängigkeit von der Zeit. Für jedes Rohr ist die Regenerierungsphase (exotherme Phase) einfach schraffiert angegeben, während die Dehydrierung (endotherme Phase) als kreuzschraffierter Bereich angegeben ist. In dem gezeigten Beispiel ist die Dehydrierzeit doppelt so lang wie die Regenerierzeit und beträgt 5 Stunden. Die Regenerierung der drei Rohre erfolgt zeitversetzt derart, daß jeweils in einem Rohr die Regenerierung des Katalysators abläuft, während in den anderen beiden Rohren die Dehydrierung durchgeführt wird. Auf diese Weise ist sichergestellt, daß die Anzahl der Rohre, in denen dehydriert wird, wie auch die Anzahl der Rohre, in denen regeneriert wird, stets konstant ist. Auf diese Weise ist der Wärmefluß von dem Wirbelgut in die Rohre wie auch der Wärmefluß aus den Rohren in das Wirbelgut zeitlich konstant.

Selbstverständlich sind neben dem dargestellten Dreier-Schaltrhythmus und einer durch 3 teilbaren Anzahl von Rohren auch andere Schaltrhythmen möglich, beispielsweise zwei Rohre, in denen abwechselnd gleichlang regeneriert und dehydriert wird.

**Patentansprüche**

1. Verfahren zur gleichzeitigen Durchführung einer endothermen und einer exothermen Reaktion in einem Reaktionsraum, der zwei in Wärmetausch miteinander befindlichen Gruppen von Strömungswegen aufweist, wobei die eine Gruppe von Strömungswegen von einem eine endotherme Reaktion und die andere Gruppe von Strömungwegen von einem eine exotherme Reaktion durchlaufenden Fluid durchströmt wird, dadurch gekennzeichnet, daß die Strömungswege für die beiden Fluide in Zeitintervallen vertauscht werden.

2. Verfahren nach Anspruch 1, dadurch gekennzeichnet, daß die endotherme Reaktion in Anwesenheit eines Katalysators durchgeführt wird.

3. Verfahren nach Anspruch 1 oder 2, dadurch gekennzeichnet, daß als endotherme Reaktion eine Dehydrierung von Kohlenwasserstoffen durchgeführt wird.

4. Verfahren nach einem der Ansprüche 1 bis 3, dadurch gekennzeichnet, daß bei der exothermen Reaktion Rückstände, die sich bei der endothermen Reaktion in dem Reaktionsraum gebildet haben, oxidiert werden.

5. Verfahren nach Anspruch 4, dadurch gekennzeichnet, daß die Rückstände als wesentlichen Bestandteil Koks enthalten.

6. Verfahren nach einem der Ansprüche 1 bis 5, dadurch gekennzeichnet, daß die exotherme Reaktion auf einem höheren Temperaturniveau als die endotherme Reaktion durchgeführt wird.

7. Verfahren nach einem der Ansprüche 1 bis 6, dadurch gekennzeichnet, daß die Wärmeübertragung über ein Hilfsfluid erfolgt.

8. Verfahren nach Anspruch 7, dadurch gekennzeichnet, daß das Hilfsfluid ein fluidisierter Teilchenstrom ist.

9. Verfahren nach Anspruch 8, dadurch gekennzeichnet, daß die fluidisierten Teilchen kontinuierlich aus einem Wirbelbett (32) abgezogen, außerhalb des Wirbelbettes aufgeheizt und in das Wirbelbett zurückgeleitet werden.

10. Verfahren nach einem der Ansprüche 7 bis 9, dadurch gekennzeichnet, daß das Hilfsfluid auf einer Temperatur gehalten wird, die oberhalb der Temperatur, bei der die endotherme Reaktion und unterhalb der Temperatur, bei der die exotherme Reaktion stattfindet, liegt.

11. Verfahren nach einem der Ansprüche 1 bis 10, dadurch gekennzeichnet, daß die beiden Fluide im Gleich- oder Gegenstrom durch die Strömungswege geführt werden.

12. Reaktor zur Durchführung des Verfahrens nach Anspruch 1 mit einem Reaktionsraum, der zwei in wärmetauschender Verbindung miteinander stehende Gruppen von Strömungswegen aufweist, die jeweils an eine Zuleitung und eine Ableitung für zweierlei Fluide angeschlossen sind, dadurch gekennzeichnet, daß zwischen den Zuleitungen (15, 16) und den Ableitungen (17, 18) und den zwei Gruppen von Strömungswegen Umschalteinrichtungen (19, 20) vorgesehen sind, durch die beide Zu- und Ableitungen mit jeder Gruppe verbindbar sind.

13. Reaktor nach Anspruch 12, dadurch gekennzeichnet, daß der Reaktionsraum mit einem Katalysator gefüllt ist.

14. Reaktor nach Anspruch 12 oder 13, dadurch gekennzeichnet, daß der Außenraum um die Strömungswege fluidisierbare Teilchen enthält.

15. Reaktor nach einem der Ansprüche 12 bis 14, dadurch gekennzeichnet, daß die Strömungswege innerhalb von in einem Gehäuse 1 angeordneten Rohren 4 angeordnet sind.

16. Reaktor nach einem der Ansprüche 12 bis 15, dadurch gekennzeichnet, daß die Strömungswege durch die Zwischenräume zwischen mit Abstand zueinander angeordneten parallelen Platten (26, 27) gebildet ist, wobei jeweils benachbarte Zwischenräume an verschiedene Zuleitungen (15, 16) und Ableitungen (17, 18) angeschlossen sind.

**Claims**

1. A method of simultaneously carrying out an endothermic and an exothermic reaction in a reaction chamber having two groups of flow paths which are in heat exchange relationship with each other, wherein a fluid involving an endothermic reaction flows through the one group of flow paths and a fluid involving an exothermic reaction flows through the other group of flow paths, characterised in that the flow paths for the two fluids are interchanged at intervals of time.

2. A method according to claim 1 characterised in that the endotherm reaction is carried out in the presence of a catalyst.

3. A method according to claim 1 or claim 2 characterised in that dehydrogenation of hydrocarbons is carried out as the endothermic reaction.

4. A method according to one of claims 1 to 3 characterised in that in the exothermic reaction residues which were formed in the endothermic reaction in the reaction chamber are oxidised.

5. A method according to claim 4 characterised in that the residues contain coke as a substantial component thereof.

6. A method according to one of claims 1 to 5 characterised in that the exothermic reaction is carried out at a higher temperature level than the endothermic reaction.

7. A method according to one of claims 1 to 6 characterised in that the transfer of heat is effected by way of an auxiliary fluid.

8. A method according to claim 7 characterised in that the auxiliary fluid is a fluidised flow of particles.

9. A method according to claim 8 characterised in that the fluidised particles are continuously drawn from a fluidised bed (32), heated outside the fluidised bed, and returned to the fluidised bed.

10. A method according to one of claims 7 to 9 characterised in that the auxiliary fluid is kept at a temperature above the temperature at which the endothermic reaction occurs and below the temperature at which the exothermic reaction occurs.

11. A method according to one of claims 1 to 10 characterised in that the two fluids are passed through the flow paths in co-flow or counter-flow relationship.

12. A reactor for carrying out the method according to claim 1 comprising a reaction chamber having two groups of flow paths which are in heat-exchanging communication with each other and which are respectively connected to a feed conduit and a discharge conduit for two kinds of fluids, characterised in that provided between the feed conduits (15, 16) and the discharge conduits (17, 18) and the two groups of flow paths are change-over switching means (19, 20) for connecting the two feed and discharge conduits to each group.

13. A reactor according to claim 12 characterised in that the reaction chamber is filled with a catalyst.

14. A reactor according to claim 12 or claim 13 characterised in that the external space around the flow paths contains fluidisable particles.

15. A reactor according to one of claims 12 to 14 characterised in that the flow paths are arranged within tubes (4) disposed in a housing (1).

16. A reactor according to one of claims 12 to 15 characterised in that the flow paths are formed by the intermediate spaces between spaced-apart parallel plates (26, 27), wherein respectively adjacent intermediate spaces are connected to different feed conduits (15, 16) and discharge conduits (17, 18).

**Revendications**

1. Procédé pour l'exécution simultanée d'une réaction endothermique et d'une réaction exothermique dans un volume de réaction, qui présente deux groupes de chemins de flux se trouvant ensemble en échange de chaleur, par lequel l'un des groupes de chemins de flux est traversé par un fluide subissant une réaction endothermique, et l'autre groupe de chemins de flux est traversé par un fluide subissant une réaction exothermique, caractérisé en ce que les

chemins de flux pour les deux fluides sont permutés à des intervalles de temps.

2. Procédé selon la revendication 1, caractérisé en ce que la réaction endothermique est exécutée en présence d'un catalyseur.

3. Procédé selon les revendications 1 ou 2, caractérisé en ce que la réaction endothermique est une déshydrogénation d'hydrocarbures.

4. Procédé selon l'une des revendications 1 à 3, caractérisé en ce que, lors de la réaction exothermique, des résidus, qui se sont formés lors de la réaction endothermique dans le volume de réaction, sont oxydés.

5. Procédé selon la revendication 4, caractérisé en ce que les résidus contiennent du coke comme composant essentiel.

6. Procédé selon l'une des revendications 1 à 5, caractérisé en ce que la réaction exothermique est exécutée à un plus haut niveau de température que la réaction endothermique.

7. Procédé selon l'une des revendications 1 à 6, caractérisé en ce que la transmission de chaleur a lieu par l'intermédiaire d'un fluide auxiliaire.

8. Procédé selon la revendication 7, caractérisé en ce que le fluide auxiliaire est un flux de particules fluidisées.

9. Procédé selon la revendication 8, caractérisé en ce que les particules fluidisées sont tirées de façon continue d'un lit de fluidisation (32), chauffées en dehors du lit de fluidisation et renvoyées dans le lit de fluidisation.

10. Procédé selon l'une des revendications 7 à 9, caractérisé en ce que le fluide auxiliaire est maintenu à une température qui se trouve audessus de la température à laquelle a lieu la réaction endothermique, et en dessous de la température à laquelle a lieu la réaction exothermique.

11. Procédé selon l'une des revendications 1 à 10, caractérisé en ce que les deux fluides sont conduits en parallèle ou à contre-courant dans les chemins de flux.

12. Réacteur pour l'exécution du procédé selon la revendication 1 avec un volume de réaction, qui présente deux groupes de chemins de flux se trouvant ensemble en relation d'échange thermique, qui chaque fois sont reliés à une conduite d'arrivée et à une conduite de départ pour deux sortes de fluides, caractérisé en ce que, entre les conduites d'arrivée (15, 16) et les conduites de départ (17, 18) et les deux groupes de chemins de flux, des dispositifs de commutation (19, 20) sont prévus, lesquels sont raccordables à chaque groupe par les deux conduites d'arrivée et de départ.

13. Réacteur selon la revendication 12, caractérisé en ce que le volume de réaction est rempli avec un catalyseur.

14. Réacteur selon les revendications 12 ou 13, caractérisé en ce que le volume extérieur autour des chemins de flux contient des particules fluidisées.

15. Réacteur selon l'une des revendications 12 à 14, caractérisé en ce que les chemins de flux sont disposés à l'intérieur de tubes (4) installés dans un carter (1).

16. Réacteur selon l'une des revendications 12 à 15, caractérisé en ce que les chemins de flux sont formés par des intervalles entre des plaques parallèles (26, 27) disposées à distance les unes des autres, par lequel chaque fois les intervalles voisins sont reliés à différentes conduites d'arrivée (15, 16) et de départ (17, 18).

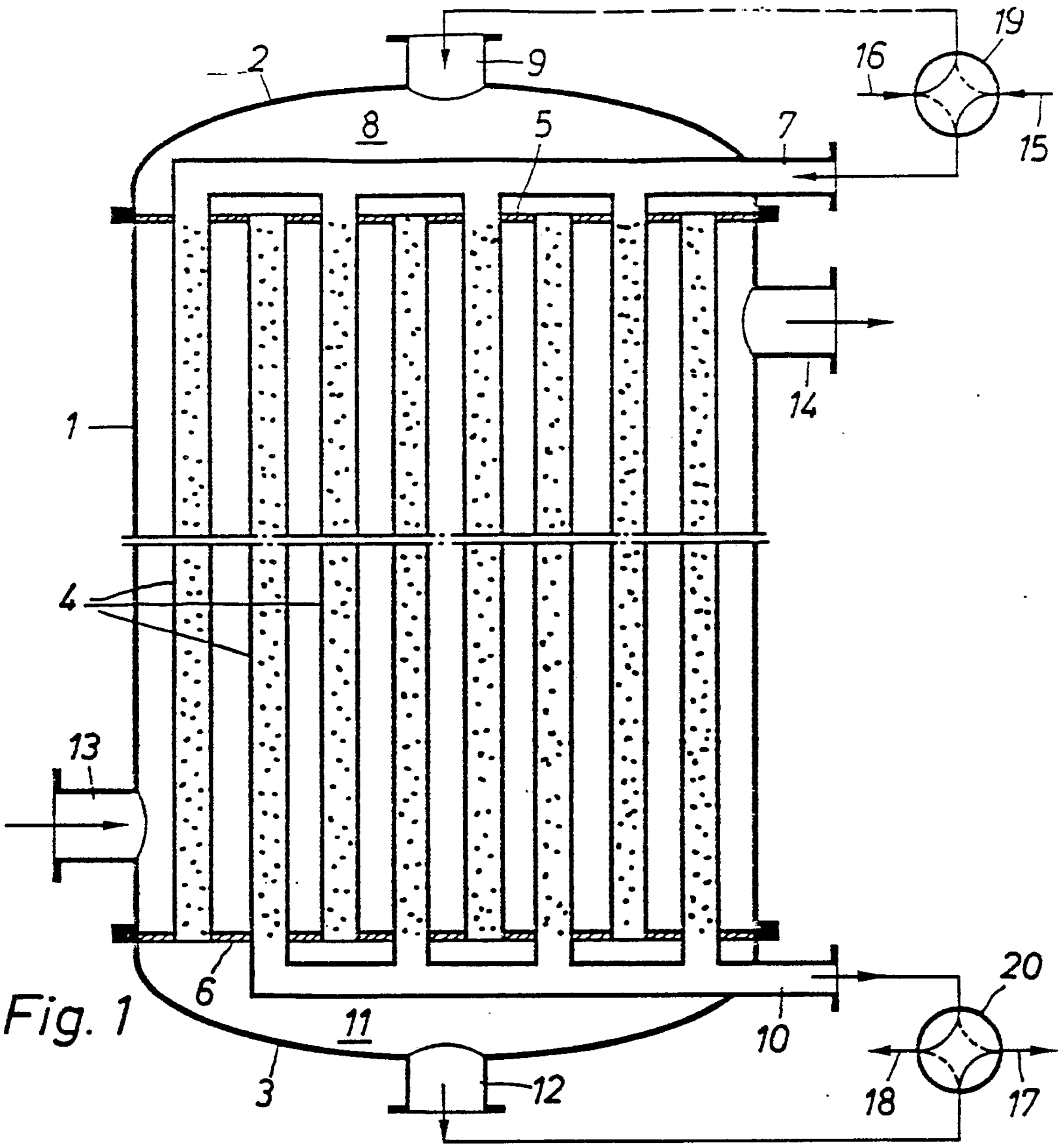
1
2
3
4
5
6
7
8
9
10
11
12
13
14
15
16
17
18
19
20

Fig. 1

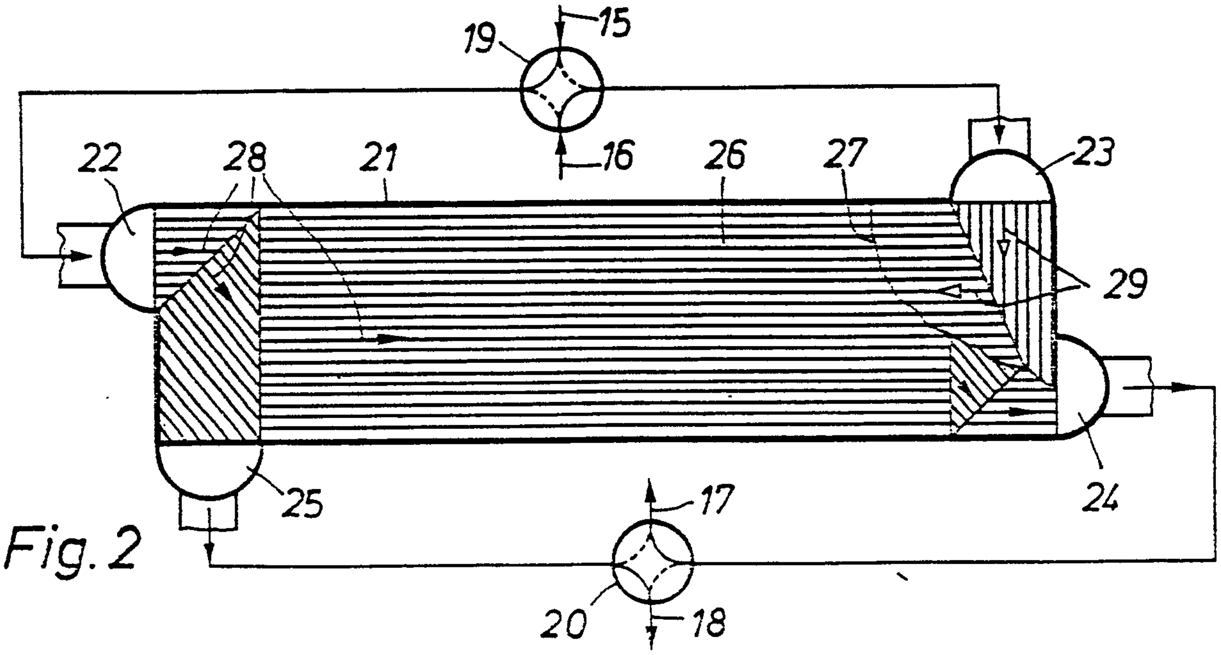
15
16
17
18
19
20
21
22
23
24
25
26
27
28
29

Fig. 2

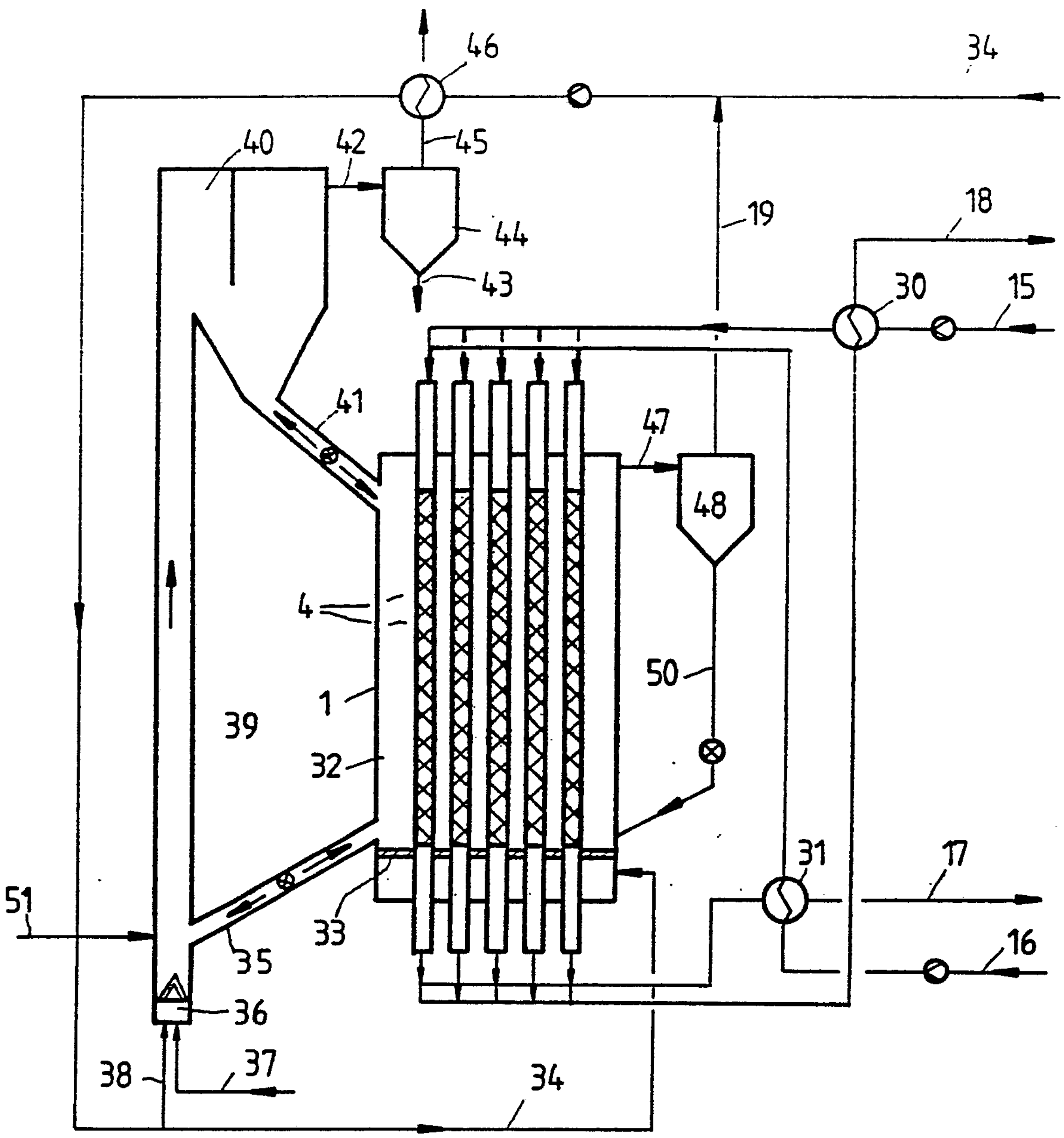
46
34
40
42
45
44
19
18
43
30
15
41
47
48
4
50
1
39
32
31
17
51
33
35
16
36
38
37
34

Fig.3

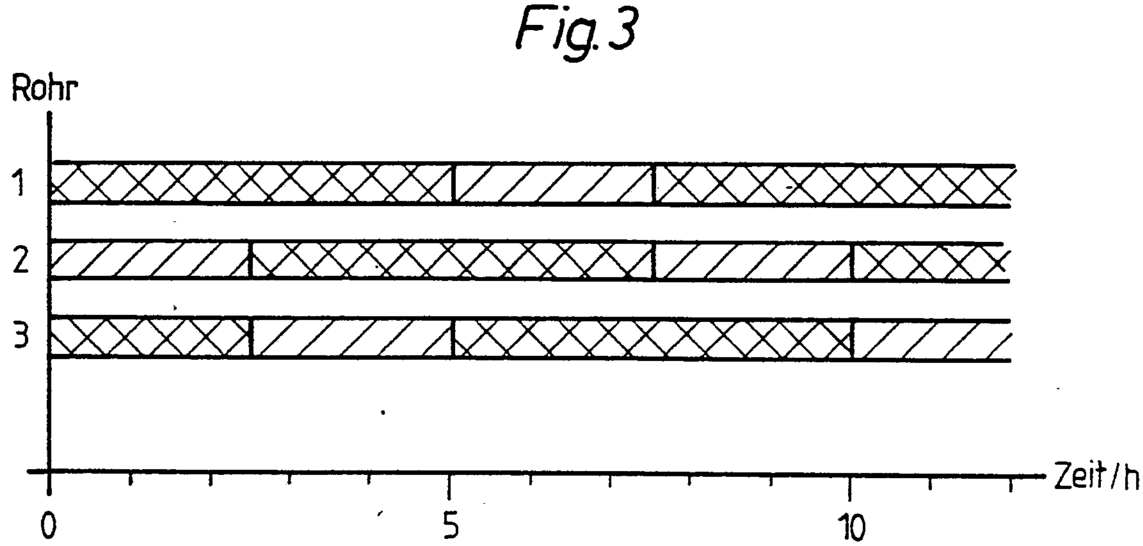
Rohr
1
2
3
Zeit/h
0
5
10

Fig 4